# EUROPEAN PATENT SPECIFICATION

(11) **EP 0 448 164 B1**
(45) Date of publication and mention of the grant of the patent: **29.07.1998**
(21) Application number: 91200571.7
(22) Date of filing: 18.03.1991
(51) Int. Cl.: H03H 17/06, H04N 5/44

(54) **Method and apparatus for processing a signal**
Verfahren und Vorrichtung zur Signalverarbeitung
Méthode et dispositif pour le traitement d'un signal

(30) Priority: 21.03.1990 GB 9006325; 28.01.1991 GB 9101771
(43) Date of publication of application: 25.09.1991
(73) Proprietor: PHILIPS ELECTRONICS UK LIMITED, Croydon CR9 3QR (GB); Philips Electronics N.V., 5621 BA Eindhoven (NL)
(72) Inventor: Trew, Timothy Ian Paterson, Surrey, RH1 5HA (GB)
(74) Representative: Andrews, Arthur Stanley

(56) References cited:
- EP-A- 344 854
- EP-A- 415 325
- SOVIET INVENTIONS ILLUSTRATED Section EI, Week 8450, 30 January 1985 Derwent Publications Ltd., London, GB; Class U, Page 7, AN 311278

## Description

The present invention relates to a method of processing an applied signal in which the applied signal is low pass filtered to produce a filtered signal. The invention also relates to apparatus using the above method.

Apparatus using the above method is described in European Patent Application EP-A-0344854 and comprises a low pass filter incorporated in a correction circuit of an interpolation filter. As will be described in relation to the embodiments of the present invention the use of such a correction circuit in the production of a correction signal can produce irregularities in a display signal and can cause problems in other applications.

It is an object of the invention to provide a method and apparatus capable of at least mitigating such problems.

The present invention provides a method of processing an applied signal combining the steps of:
i) low pass filtering said applied signal to produce a filtered signal,
ii) comparing said applied signal with said filtered signal according to a given criterion, and
iii) selecting as an output signal said applied signal or said filtered signal according to whether or not said criterion is met;
characterised in that said given criterion is the relative absolute value of the differences between the applied and filtered signals and a reference signal.

The method according to the invention has the advantage that where the use of the filtered signal could cause a problem it can be replaced by the applied signal i.e. the signal prior to filtering.

The signal selected as the output may be that having the lowest absolute value. The signs of the differences may be compared and said output signal replaced by a reference level at times when the signs differ.

The invention also provides a method of interpolating a picture signal in accordance with a sampling pattern which is shifted from line to line comprising the steps of:-
i) identifying a group of four picture elements of the picture signal located around a picture element to be interpolated,
ii) subjecting three of the group of picture elements to median filtering,
iii) producing a correction signal by:-
   a. averaging the remaining one of the group of picture elements with that picture element of the group located diametrically with the picture element to be interpolated,
   b. combining the median filtered picture elements and the averaged picture elements, and
   c. processing said combined picture elements,
   and,
iv) combining the median filtered picture elements and said correction signal to produce an interpolated signal,
characterised in that the processing of said combined picture elements is in accordance with the method of appended claims 1, 2 or 3.

The invention additionally provides apparatus for processing an applied signal comprising means for receiving said applied signal, means for subjecting said applied signal to low pass filtering, and means for deriving a filtered signal from said filtering means, characterised in that said apparatus additionally comprises means for comparing said applied signal and said filtered signal according to a given criterion, and means for selecting as an output signal said applied signal or said filtered signal according to whether or not said criterion is met.

The comparing means compares the relative absolute values of the differences between the applied signal and the filtered signal and a reference signal whilst the selecting means may select, under the control of said comparing means, that signal having the lowest absolute value. A second comparing means may be provided for comparing the signs of the said differences and second selecting means provided for selecting the reference level instead of said output signal under the control of said second comparing means when the signs differ.

The invention further comprises an interpolation filter for a picture signal sampled in accordance with a sampling pattern which is shifted from line to line, said interpolation filter comprising means for identifying a group of four elements of the picture signal located around a picture element to be interpolated, a median filter having three inputs for receiving three of the group of picture elements, a correction circuit comprising an averaging circuit having two inputs for receiving the remaining one of the group of picture elements with that picture element of the group located diametrically with the picture element to be interpolated, a first combining means for combining the output of said averaging circuit with the output of said median filter and means for processing said combined outputs to produce a correction signal, and a second combining means for combining the output of said median filter and said correction signal to produce an interpolated signal, characterised in that said processing means comprises the apparatus as defined in the appended claims 5, 6, 7 or 8.

The above and other features of the invention will be described, by way of example, with reference to the accompanying drawings, in which:-
Figure 1 is a block diagram of apparatus according to the invention,
Figure 2 shows the responses of various filter arrangements,
Figure 3 is a block diagram of an interpolation filter incorporating the apparatus of Figure 1,
Figures 4 and 5 show diagrammatically arrangements of picture elements in a picture signal applied to the filter of Figure 3, and
Figure 6 is a modification of the block diagram shown in Figure 1.

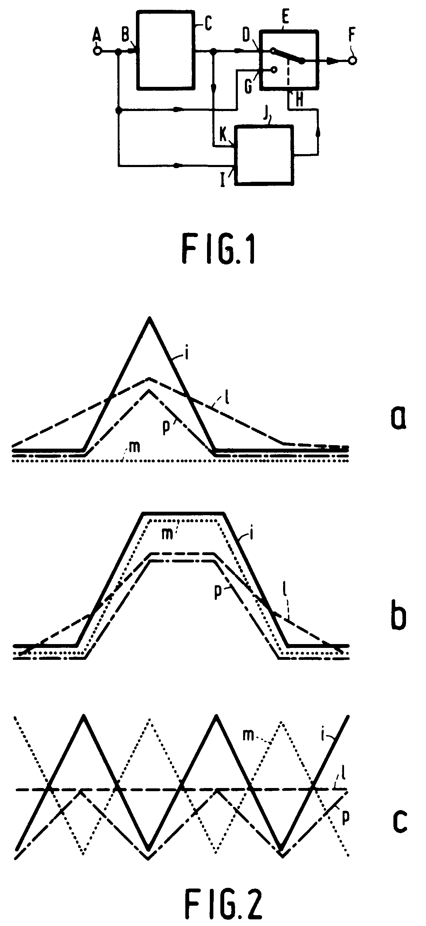

Figure 1 shows a filter arrangement having a signal input A which is connected to input terminal B of a low pass filter C. The actual construction of the low pass filter C is unimportant and will depend, amongst other things, on the nature of the applied signal, the filter being either analogue or digital, linear or non-linear. The filtered output of the low pass filter C is applied to an input D of a selection device E in the form of a changeover switch or a multiplexer which input in the figure is connected by way of the selection device E output to an output terminal F of the filter arrangement.

The signal at input terminal A is also applied to a second input G of the switch or multiplexer E and will be directed to its output, when appropriate, under the control of a control signal at a control input H. In addition the signal at input terminal A is applied to a first input I of a comparator J a second input K of which receives the filtered signal from the output of a low pass filter C.

In operation the unfiltered and filtered signals applied to inputs I and K have their amplitudes compared in comparator J to produce a control signal at its output indicating which of the two inputs has the lowest amplitude. This control signal is applied to control input H of the selection device E such that if the filtered signal at its input D has the lowest amplitude it is that signal which is conveyed to the output terminal G whilst if the unfiltered signal at input F has the lowest amplitude then a connection is made between that input and the output at the output terminal F.

One place in which such a filter arrangement may be used is in an interpolation filter for a picture signal sampled in accordance with a sampling pattern which is shifted from line to line. Interpolation filters of this type can be used in high definition television systems such as the HD-MAC system which is described in the paper "HD-MAC Coding of High Definition Television" by F. W. P. Vreeswijk, contribution to the Club de Rennes Young Researcher's Seminar, M.I.T. Cambridge, Mass., U.S.A., 9-13 October 1988 and in European Patent Application EP-A-0322955.

The HD-MAC system is a bandwidth compression system which reduces the transmitted spatial information by diagonal filtering, followed by quincunx sub-sampling. The system has three branches with different spatial frequency capacities, transmitting the information over different periods so that the overall data rate is constant. The picture is divided into uniform tesselating blocks and the information for each block is transmitted at the lowest temporal rate, 20ms, 40ms or 80ms, which gives adequate portrayal of the motion within the block. Motion compensated temporal interpolation is used in the bandwidth restoration decoder to allow the 40ms branch to be used for motion of up to ±6 pixels/40ms.

The decimation filter characteristics and sub-sampling patterns for the three branches are shown in the Vreeswijk paper and EP-A-0322955. It should be noted that the three sub-sampling patterns all have the same structure, although they have different sampling densities. The non-linear spatial interpolators for the branches therefore have a similar structure. They each use a three point 2-D median filter as the core of the filter which uses the middle, or most popular, of the three values as the estimate for the missing pixel. This is not sufficient for accurate interpolation, however, since it fails to interpolate missing pixels in a horizontal line against a contrasting background. For example, if the missing pixel forms part of a white horizontal line against a dark background, then the transmitted samples above and below the pixel to be interpolated will both be dark, so this value will be used incorrectly as its estimate.

This is overcome by adding a correction signal which is the difference between the output of the median filter and the average of its horizontally adjacent neighbours. Horizontal lines are reproduced correctly if this correction signal is added to the output of the median filter. This is not sufficient since the correction signal will now degrade vertical lines, so the actual interpolators employ a low-pass filter to which the correction signal is applied before adding it to the median filter output.

Such an interpolation filter is described in the above mentioned European Patent Application EP-A-0344854 which gives a reasonable picture, but it is not perfect since the low-pass filter will not completely suppress the correction signal on vertical lines, introducing serrations. These serrations are exacerbated by the inverse vertical compatibility improvement filter employed in the system and spread up to three pixels either side of the line. This result is representative of the 80ms branch or the odd field of the 40ms branch. The horizontal spacing of the transmitted sample is doubled for the 20ms branch, in which case this interpolator is followed by a horizontal filter, extending the serrations to ±6 pixels.

An earlier investigation examined the effect of replacing the three-tap linear low-pass filter for the correction signal with a median filter. This improved the performance on purely vertical lines by restricting the correction signal's spread, but it did not prove to be robust on real picture material and a more reliable filter was required.

The general behaviour of three-tap linear and median filters to isolated spikes and repetitive high frequency waveforms is illustrated in Figure 2. Figure 2a shows at m how a median filter will eliminate an isolated spike in an input waveform i, whereas at l a linear filter will reduce the spike's peak amplitude but spread its width. The fragility of the median filter is exemplified by Figure 2b in which doubling the width of the spike of the input waveform i completely changes the median filtered m output. Figure 2c shows an even more extreme case in which the median filter output m is out of phase with the input signal i and the linear filter output l remains constant. The linear filter, although less effective at eliminating isolated spikes, performs more satisfactorily on all types of signals. A technique was therefore sought which might improve filter performance over wide range of picture material and it was found that such an improvement could be achieved if the filter used the principles that the filtered correction should never exceed its original value and, for bipolar signals, it should not change its sign. Figure 2 additionally shows at the waveforms p how this modification improves the performance of the linear filter by preventing it from increasing the width of isolated spikes, while still attenuating their peaks.

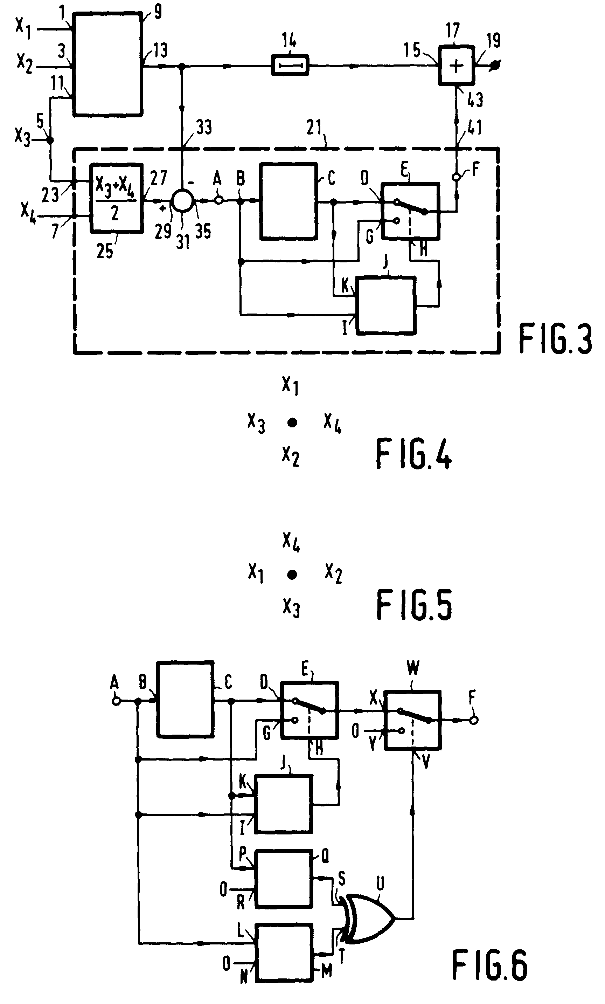

An interpolation filter which meets the first principle of the filtered correction signal of never exceeding its original value is shown in Figure 3 which is a modification of the interpolation filter shown in the above mentioned EP-A-0344854. In the accompanying Figure 3 the filter arrangement of the accompanying Figure 1 replaces the low pass filter in the correction circuit of EP-A-0344854, the accompanying Figure 1 and the accompanying Figure 3 indicate like components.

The interpolation filter of Figure 3 has four inputs 1, 3, 5 and 7 to which signals of four pixels x₁, x₂, x₃ and x₄, respectively, are applied. These four pixels x₁, x₂, x₃ and x₄ may be located with respect to one another and to a pixel to be interpolated in the way as is shown in Figure 4 or in Figure 5, in which a dot (.) denotes the pixel to be interpolated. The inputs 1 and 3 of the interpolation filter are also inputs of a median filter 9, a third input 11 of which is connected to the input 5 of the interpolation filter. An output 13 of the median filter 9 is coupled via a delay element 14 to a first input 15 of a combining circuit 17 formed by an adder, an output 19 of which also constitutes the output of the interpolation filter. The input 7 of the interpolation filter is also a first input of a correction circuit 21, a second input 23 of which is connected to the input 5 of the interpolation filter. The inputs 7 and 23 of the correction circuit 21 also constitute inputs of an averaging circuit 25. An output 27 of the averaging circuit 25 is connected to a positive input 29 of a subtractor circuit 31 whose negative input 33, which also constitutes a third input of the correction circuit 21, is connected to the output 13 of the median filter 9. If the inputs 29 and 33 of the subtractor circuit 31 are interchanged, the combining circuit 17 must be formed by a further subtractor circuit, the first input 15 of which would be positive whilst the second input 43 would be negative. An output 35 of the subtractor circuit 31 is connected to the signal input A of the filter arrangement described in Figure 1 above and whose signal output F is connected to the output 41 of the correction circuit 21 which is connected to a second input 43 of the combining circuit 17. The low-pass filter C of the filter arrangement in the direction of the connection line of the pixels x₃ and x₄ and ensures that the correction circuit 21 is exclusively active for those frequencies at which the median filter 9 does not function correctly, but at which the averaging circuit does function correctly. The construction and operation of the low pass filter C of the filter arrangement may correspond to that of the low pass filter of the above mentioned EP-A-0344854.

If the picture signal applied to the interpolation filter originates from a field composed of four received fields, the output signal of the interpolation filter can be applied substantially directly to a display device. If the picture signal applied to the interpolation filter originates from only one received field, an extra interpolation step is to be carried out. A very simple interpolator is preferably chosen for this purpose, for example an interpolator determining the mean value of two pixels locate side by side on the same line. Such a simple interpolator may be used because the spatial resolution is low anyway in moving pictures.

The interpolation filter so far described with relation to the accompanying Figure 3 only meets the first of the above mentioned principles, namely that the filtered correction should never exceed its original value. The second mentioned principle that the filtered correction should never change its sign can be achieved by the use of a filter arrangement as shown in the accompanying Figure 6 which is a modification of the accompanying Figure 1 and where like reference symbols indicate like components. In Figure 6 the signal at input A is also applied to a first input L of a second comparator M the second input N of which receives a reference level which in this case is zero. The filtered output from low pass filter C is also applied to a first input P of a third comparator Q whose second input R also receives a reference level which is again zero. Comparators M and R respectively produce a "high" output if their first inputs L and P are positive with respect to the zero level at their second inputs or a "low" output if their first inputs L and P are negative with respect to the zero level. These outputs are applied to respective inputs S and T of an exclusive OR (EX-OR) gate U whose output is applied to the control input V of a second selection device W in the form of a changeover switch or multiplexer. A first input X of selection device W is connected to the output of the first selection device E whilst its second input Y receive a reference level which is also zero. The filter arrangement output F is connected to the output of the second selection device W.

In operation if the signals to the first inputs L and P of the second and third comparators M and Q are both of the same polarity the inputs S and T to the EX-OR gate U will correspond (both "high" or both "low") and there will be no output from the EX-OR gate U for application to control input V. Whichever signal is then present at the output of the first selection device E will appear at the output F of the filter arrangement. If however the signals at the respective first inputs L and P of the second and third comparators M and Q differ in their polarities the signals at the inputs S and T of the EX-OR gate U will differ (one "high" and one "low") and the gate U will the second and third comparators M and Q differ in their polarities the signals at the inputs S and T of the EX-OR gate U will differ (one "high" and one "low") and the gate U will produce an output for application to the control input V to change the operation of the second selection device W. In this case the zero reference level present at the second input Y appears at the output F of the filter arrangement.

Although in the filter arrangements described above the selection E is arranged to convey the lowest amplitude signal it will be appreciated that there might be applications in which the higher amplitude signal is the one that is to be conveyed to the filter arrangement output F. In addition, it will also be appreciated that the control of the selection devices E and/or W may be performed in ways other than that described and according to different criteria.

For instance, when the mean value of the input signal at input A is expected to be non-zero this value can be used as a reference level against which the inputs and output of the low pass filter C are compared. The selection criterion will now be based on the absolute values of differences between the applied and filtered signals.

Although the arrangement of Figure 1 is only shown applied to an interpolation filter as in Figure 3, such an arrangement will have other applications. For example, in cases where the input signal may be expected to have a zero average level such as where the signal represents the difference between signals derived from a common source. The arrangement will then attenuate localised transients without introducing spurious responses elsewhere.

From reading the present disclosure, other modifications will be apparent to persons skilled in the art. Such modifications may involve other features which are already known per se and which may be used instead of or in addition to features already described herein.

"It has been stated above that the drawings illustrate examples of embodiments of the invention and, in order to avoid any misunderstanding, it is hereby further stated that, in the following claims, where technical features mentioned in any claim are followed by reference signs relating to features in the drawings and placed between parentheses, these signs have been included in accordance with Rule 29(7) EPC for the sole purpose of facilitating comprehension of the claim, by reference to an example."

## Claims

1. A method of processing an applied signal comprising the steps of:
i) low pass filtering the applied signal to produce a filtered signal,
ii) comparing said applied signal with said filtered signal according to a given criterion, and
iii) selecting as an output signal said applied signal or said filtered signal according to whether or not said criterion is met
characterised in that said given criterion is the relative absolute value of the differences between the applied and filtered signals and a reference signal.

2. A method as claimed in Claim 1, in which the signal selected as the output is that having the lowest absolute value.

3. A method as claimed in Claim 2, in which a second output signal is obtained by comparing the signs of said differences and by replacing said output signal by the reference level at times when the signs differ.

4. A method of interpolating a picture signal in accordance with a sampling pattern which is shifted from line to line comprising the steps of:-
i) identifying a group of four elements of the picture signal located around a picture element to be interpolated,
ii) subjecting three of the group of picture elements to median filtering,
iii) producing a correction signal by:-
a) averaging the remaining one of the group of picture elements with that picture element of the group located diametrically with the picture element to be interpolated,
b) combining the median filtered picture elements and the averaged picture elements, and
c) processing said combined picture elements, and,
iv) combining the median filtered picture elements and said correction signal to produce an interpolated signal,
characterised in that the processing of said combined picture elements is in accordance with the method of Claims 1, 2 or 3.

5. Apparatus for processing an applied signal comprising means (A) for receiving said applied signal, means (C) for subjecting said applied signal to low pass filtering, and means for deriving a filtered signal from said filtering means, characterised in that said apparatus additionally comprises means (J) for comparing said applied signal and said filtered signal according to a given criterion, and means (E) for selecting as an output signal said applied signal or said filtered signal according to whether or not said criterion is met.

6. Apparatus as claimed in Claim 5, in which said comparing means compares the relative absolute values of the differences between the applied signal and the filtered signal and a reference signal.

7. Apparatus as claimed in Claim 6, in which said selecting means selects, under the control of said comparing means, that signal having the lowest absolute value.

8. Apparatus as claimed in Claim 7, in which said apparatus additionally comprises second comparing means (U) for comparing the signs of the said differences, and second selecting means (W) for selecting the reference level instead of said output signal under the control of said second comparing means when the said signs differ.

9. An interpolation filter for a picture signal sampled in accordance with a sampling pattern which is shifted from line to line, said interpolation filter comprising means (1, 3, 5, 7) for identifying a group of four elements of the picture signal located around a picture element to be interpolated, a median filter (9) having three inputs (1, 3, 11) for receiving three of the group of picture elements, a correction circuit comprising an averaging circuit (25) having two inputs for receiving the remaining one of the group of picture elements with that picture element of the group located diametrically with the picture element to be interpolated, a first combining means (31) for combining the output of said averaging circuit with the output of said median filter and means for processing said combined outputs to produce a correction signal, and a second combining means (17) for combining the output of said median filter and said correction signal to produce an interpolated signal, characterised in that said processing means comprises apparatus as claimed in Claims 5, 6, 7, or 8.

## Patentansprüche

1. Verfahren zur Verarbeitung eines zugeführten Signals, das die folgenden Schritte umfaßt:
i) Tiefpaßfilterung des genannten zugeführten Signals zur Erzeugung eines gefilterten Signals;
ii) Vergleichen des genannten zugeführten Signals mit dem genannten gefilterten Signal anhand eines bestimmten Kriteriums;
iii) Auswählen des genannten zugeführten Signals oder des genannten gefilterten Signals als Ausgangssignal in Abhängigkeit davon, ob das genannte Kriterium erfüllt wird oder nicht;
dadurch gekennzeichnet, daß das genannte bestimmte Kriterium der jeweilige Absolutwert der Differenz zwischen dem zugeführten bzw. dem gefilterten Signal und einem Referenzsignal ist.

2. Verfahren nach Anspruch 1, wobei das als Ausgangssignal gewählte Signal dasjenige Signal ist, welches den niedrigsten Absolutwert hat.

3. Verfahren nach Anspruch 2, wobei man ein zweites Ausgangssignal erhält, indem die Vorzeichen der genannten Differenzen vergleichen werden und das genannte Ausgangssignal durch den Referenzpegel ersetzt wird, wenn die Vorzeichen voneinander abweichen.

4. Verfahren zur Interpolation eines Bildsignals entsprechend einem von Zeile zu Zeile verschobenen Abtastmuster, wobei das Verfahren die folgenden Schritte umfaßt:
i) eine Gruppe von vier Bildelementen des Bildsignals identifizieren, die um ein zu interpolierendes Bildelement herum angeordnet sind;
ii) drei Bildelemente aus der Gruppe einer Medianfilterung unterziehen;
iii) ein Korrektursignal erzeugen durch:
a) Mittelwertbildung des verbleibenden Bildelementes aus der Gruppe der Bildelemente und desjenigen Bildelementes der Gruppe, das diametral zu dem zu interpolierenden Bildelement angeordnet ist,
b) Kombinieren der mediangefilterten Bildelemente und der gemittelten Bildelemente, und
c) Verarbeiten der genannten kombinierten Bildelemente,
und
iv) die mediangefilterten Bildelemente und das genannte Korrektursignal kombinieren, um ein interpoliertes Signal zu erzeugen,
dadurch gekennzeichnet, daß die Verarbeitung der genannten kombinierten Bildelemente entsprechend dem Verfahren erfolgt, welches in den Ansprüchen 1, 2 oder 3 geschildert ist.

5. Vorrichtung zur Verarbeitung eines zugeführten Signals, die folgendes umfaßt: Mittel (A) zum Empfangen des genannten zugeführten Signals, Mittel (B), um das genannte zugeführte Signal einer Tiefpaßfilterung zu unterziehen, und Mittel zum Ableiten eines gefilterten Signals von den genannten Filtermitteln, dadurch gekennzeichnet, daß die genannte Vorrichtung außerdem folgendes enthält: Mittel (J) zum Vergleichen des genannten zugeführten Signals und des genannten gefilterten Signals anhand von einem bestimmten Kriterium, und Mittel (E), um das genannte zugeführte Signal oder das genannte gefilterte Signal als Ausgangssignal zu wählen, je nachdem, ob das genannte Kriterium erfüllt wird oder nicht.

6. Vorrichtung nach Anspruch 5, wobei das genannte Vergleichsmittel die jeweiligen Absolutwerte der Differenz zwischen dem zugeführten Signal bzw. dem gefilterten Signal und einem Referenzsignal vergleicht.

7. Vorrichtung nach Anspruch 6, wobei das genannte Auswahlmittel unter der Steuerung des genannten Vergleichsmittels dasjenige Signal auswählt, das den geringsten Absolutwert hat.

8. Vorrichtung nach Anspruch 7, wobei die genannte Vorrichtung außerdem ein zweites Vergleichsmittel (U) enthält, um die Vorzeichen der genannten Differenzen zu vergleichen, und ein zweites Auswahlmittel (W), um unter der Steuerung des genannten zweiten Vergleichsmittels den Referenzpegel anstelle des genannten Ausgangssignals zu wählen, wenn die Vorzeichen voneinander abweichen.

9. Interpolationsfilter für ein Bildsignal, das in Übereinstimmung mit einem von Zeile zu Zeile verschobenen Abtastmuster abgetastet wird, wobei das genannte Interpolationsfilter folgendes enthält: Mittel (1, 3, 5, 7) zum Identifizieren einer Gruppe von vier Elementen des Bildsignals, die um ein zu interpolierendes Bildelement herum angeordnet sind, ein Medianfilter (9) mit drei Eingängen (1, 3, 11) zum Empfangen von drei Bildelementen aus der Gruppe der Bildelemente, eine Korrekturschaltung mit einer mittelwertbildenden Schaltung (25) mit zwei Eingängen zum Empfangen des verbleibenden Bildelementes aus der Gruppe der Bildelemente mit demjenigen Bildelement der Gruppe, das diametral zu dem zu interpolierenden Bildelement angeordnet ist, ein erstes Kombiniermittel (31) zum Kombinieren des Ausgangssignals der genannten mittelwertbildenden Schaltung mit dem Ausgangssignal des genannten Medianfilters, Mittel zum Verarbeiten der genannten Ausgangssignale, um ein Korrektursignal zu erzeugen, und ein zweites Kombiniermittel (17) zum Kombinieren des Ausgangssignals des -genannten Medianfilters und des genannten Korrektursignals, um ein interpoliertes Signal zu erzeugen, dadurch gekennzeichnet, daß das genannte Verarbeitungsmittel die Vorrichtung enthält, wie sie in den Ansprüchen 5, 6, 7 oder 8 beschrieben ist.

## Revendications

1. Procédé de traitement d'un signal appliqué comprenant les étapes suivantes:
i) soumettre le signal appliqué à un filtrage passe-bas afin de produire un signal filtré,
ii) comparer ledit signal appliqué audit signal filtré conformément à un critère donné, et
iii) sélectionner en tant que signal de sortie ledit signal appliqué ou ledit signal filtré suivant que ledit critère est respecté ou non,
caractérisé en ce que ledit critère donné est la valeur absolue relative des différences entre les signaux appliqué et filtré et un signal de référence.

2. Procédé suivant la revendication 1, dans lequel le signal sélectionné en tant que sortie est celui ayant la valeur absolue la plus basse.

3. Procédé suivant la revendication 2, dans lequel on obtient un deuxième signal de sortie en comparant les signes desdites différences et en remplaçant ledit signal de sortie par le niveau de référence aux moments où les signes diffèrent.

4. Procédé d'interpolation d'un signal vidéo suivant un motif d'échantillonnage qui est déplacé de ligne en ligne, comprenant les étapes suivantes:
i) identifier un groupe de quatre éléments d'image du signal vidéo situé autour d'un élément d'image à interpoler,
ii) soumettre trois éléments d'image du groupe d'éléments d'image à un filtrage par la médiane,
iii) produire un signal de correction par:
a) le moyennage de l'élément d'image restant du groupe d'éléments d'image avec l'élément d'image du groupe situé de manière diamétrale avec l'élément d'image à interpoler,
b) la combinaison des éléments d'image filtrés par la médiane et des éléments d'image moyennés, et
c) le traitement desdits éléments d'image combinés, et
iv) combiner les éléments d'image filtrés par la médiane et ledit signal de correction afin de produire un signal interpolé,
caractérisé en ce que le traitement desdits éléments d'image combinés est conforme au procédé des revendications 1, 2 ou 3.

5. Appareil destiné au traitement d'un signal appliqué, comprenant un moyen (A) pour recevoir ledit signal appliqué, un moyen (C) pour soumettre ledit signal appliqué à un filtrage passe-bas, et un moyen pour dériver un signal filtré dudit moyen de filtrage, caractérisé en ce que ledit appareil comprend en plus un moyen (J) pour comparer ledit signal appliqué et ledit signal filtré suivant un critère donné, et un moyen (E) pour sélectionner en tant que signal de sortie ledit signal appliqué ou ledit signal filtré suivant que ledit critère est respecté ou non.

6. Appareil suivant la revendication 5, dans lequel ledit moyen de comparaison compare les valeurs absolues relatives des différences entre le signal appliqué et le signal filtré et un signal de référence.

7. Appareil suivant la revendication 6, dans lequel ledit moyen de sélection sélectionne, sous la commande dudit moyen comparateur, le signal ayant la valeur absolue la plus basse.

8. Appareil suivant la revendication 7, dans lequel ledit appareil comprend en plus un deuxième moyen comparateur (u) pour comparer les signes desdites différences, et un deuxième moyen de sélection (W) pour sélectionner le niveau de référence au lieu dudit signal de sortie sous la commande dudit deuxième moyen comparateur lorsque lesdits signes diffèrent.

9. Filtre d'interpolation pour un signal vidéo échantillonné suivant un motif d'échantillonnage qui est déplacé ligne par ligne, ledit filtre d'interpolation comprenant des moyens (1, 3, 5, 7) pour identifier un groupe de quatre éléments du signal vidéo situés autour d'un élément d'image à interpoler, un filtre par la médiane (9) ayant trois entrées (1, 3, 11) pour recevoir trois éléments d'image du groupe d'éléments d'image, un circuit de correction comprenant un circuit de moyennage (25) ayant deux entrées pour recevoir l'élément d'image restant du groupe d'éléments d'image, cet élément d'image du groupe étant situé de manière diamétrale par rapport à l'élément d'image à interpoler, un premier moyen de combinaison (31) pour combiner la sortie dudit circuit de moyennage avec la sortie dudit filtre par la médiane et un moyen pour traiter lesdites sorties combinées afin de produire un signal de correction, et un deuxième moyen de combinaison (17) pour combiner la sortie dudit filtre par la médiane et ledit signal de correction afin de produire un signal interpolé, caractérisé en ce que ledit moyen de traitement comprend l'appareil suivant les revendications 5, 6, 7 ou 8.
